# EUROPÄISCHE PATENTSCHRIFT

(11) **EP 1 040 975 B1**
(45) Veröffentlichungstag und Bekanntmachung des Hinweises auf die Patenterteilung: **09.02.2005**
(21) Anmeldenummer: 00105455.0
(22) Anmeldetag: 15.03.2000
(51) Int. Cl.: B60T 8/40, F04B 49/00

(54) **Verfahren und Vorrichtung zur Ansteuerung einer Pumpe einer Bremsanlage**
Method and device for controlling a pump of a brake system
Procédé et dispositif pour la commande d' une pompe d' un système de freinage

(30) Priorität: 30.03.1999 DE 19914404
(43) Veröffentlichungstag der Anmeldung: 04.10.2000
(73) Patentinhaber: ROBERT BOSCH GMBH, 70442 Stuttgart (DE)
(72) Erfinder: Hachtel, Juergen, 74219 Moeckmuehl (DE)

(56) Entgegenhaltungen:
- EP-A- 0 713 812
- WO-A-94/07717
- WO-A-94/07718
- WO-A-96/15927
- WO-A-97/23373
- WO-A-99/55566
- DE-A- 4 408 879
- DE-A- 4 440 517

## Beschreibung

Die vorliegende Erfindung betrifft ein Verfahren und eine Vorrichtung zur Ansteuerung eines elektrischen Pumpenmotors einer Druckmittelpumpe einer Kraftfahrzeugbremsanlage gemäß den Oberbegriffen der unabhängigen Ansprüche.

Eine solche Vorrichtung ist aus der DE 44 08 879 A1 bekannt. Dabei wird bei einer Bremsanlage mit einem Motor zum Antrieb einer Hydraulikpumpe bei einem Regeleingriff des Antriebsschlupf-Regelsystems die Drehzahl des Motors nach einer vorgegebenen Verzögerungszeit reduziert. Dabei ist die Verzögerungszeit und somit die Vollansteuerzeit-dauer in Abhängigkeit von der Batteriespannung oder der Versorgungsspannung des Motors variierbar.

Aus der EP 0713 812 A2 ist eine Fahrzeugbremsanlage bekannt, bei der eine Pumpe zur Versorgung der Bremsanlage mit Hydraulikflüssigkeit durch eine Gleichstromquelle angetrieben wird. Die Ansteuerung der Pumpe erfolgt dabei durch eine regelmäßige Unterbrechung der Gleichstromversorgung. Das Verhältnis zwischen Ansteuerung der Pumpe und Unterbrechung der Stromversorgung kann dabei abhängig von der Ausgangsspannung der Gleichstromquelle gewählt werden.

Ein Verfahren und eine Vorrichtung zur Ansteuerung einer Rückförderpumpe einer Bremsanlage sind aus der WO 94/07717 bekannt. Dort werden ein Verfahren und eine Vorrichtung zur Regelung der Förderleistung einer elektromotorisch angetriebenen Hydraulikpumpe, die mit einer variablen Puls-Pulspausenfolge angesteuert wird, beschrieben. Derartige Hydraulikpumpen, die auch als Rückförderpumpen bezeichnet werden, dienen zur Erzeugung eines Hilfsdrucks in einer Bremsanlage mit einer Antriebsschlupfregelung und/oder einer Antiblockierregelung.

Während der Pulspausen wird die vom Pumpenmotor erzeugte Generatorspannung als Maß für die Pumpendrehzahl ausgewertet, in einem Regelkreis wird ein Pumpendrehzahl-Sollwert mit einem Istwert der Pumpendrehzahl verglichen, und aus der Differenz die neue Stellgröße für die Pumpenansteuerung abgeleitet. Nachteilig bei dieser bekannten Anordnung ist, daß ein sehr anspruchsvoller Regler benötigt wird, der ausgehend von der Differenz zwischen dem Soll- und Istwert ein pulsbreitenmoduliertes Signal erzeugt.

Aus der DE 44 40 517 ist ein Verfahren zur Ansteuerung einer Rückförderpumpe einer Bremsanlage bekannt, bei welcher die Rückförderpumpe bedarfsgerecht abhängig von dem Wert einer Stellgröße und/oder einer Regelabweichung eines Reglers, der das Bremsmoment und/oder die Raddrehzahl beeinflußt, ansteuerbar ist. Auch dieses Verfahren beinhaltet eine relativ aufwendige Regelung.

Insbesondere bei elektrohydraulischen Bremssystemen wird üblicherweise mittels eines Elektromotors und einer von diesem angetriebenen Hochdruckpumpe ein Hydraulikspeicher geladen. Zu Beginn der Ansteuerung wird hierbei der Pumpenmotor für eine feste Zeit voll, d.h. ungetaktet bzw. kontinuierlich, angesteuert. Der die Pumpe ansteuernde Elektromotor liegt an der Bordspannung des Kraftfahrzeugs an. Bei Erreichen des gewünschten Drucks in den Hydraulikspeicher kann die Pumpe entweder abgeschaltet, oder zur Aufrechterhaltung des Druckes in dem Hydraulikspeicher getaktet angesteuert werden. Hierbei wird in Abhängigkeit einer an der Pumpe anliegenden Pumpennachlaufspannung ein Puls-Pulspausenverhältnis der Pumpenansteuerung verändert. Ein anfängliches Puls-Pulspausenverhältnis beim Start des getakteten Betriebes (d.h. nach Beendigung der kontinuierlichen Ansteuerung der Pumpe) ist hierbei als Konstante vorgegeben. Auch die Zeitdauer der kontinuierlichen Ansteuerung der Pumpe ist bei herkömmlichen Systemen konstant eingestellt. Da jedoch die Bordspannung in einem Kraftfahrzeug sehr stark schwanken kann, führen diese konstanten Einstellungen für verschiedene Bordspannungen zu unterschiedlichen Drehzahlen der Pumpe. Eine Pumpe kann beispielsweise bei niedriger Bordspannung nur dadurch auf eine bestimmte einzuregelnde Drehzahl gebracht werden, daß während des getakteten Betriebes das Pulspausenverhältnis entsprechend verändert wird. Dies führt dazu, daß für die Einstellung einer einzuregelnden Drehzahl eine relativ lange Zeitdauer benötigt wird, da erst nach Beginn der getakteten Ansteuerung eine Regelung bzw. Änderung des Puls-Pulspausenverhältnisses eingeleitet wird.

Aufgabe der Erfindung ist daher, eine Pumpe einer Bremsanlage eines Kraftfahrzeugs derart vorzusehen, daß eine einzuregelnde Drehzahl in möglichst kurzer Zeit erreicht werden kann. Die dabei genannte Pumpe kann auch im weiteren jeglichem ein Druckmedium in einer Bremsanlage fördernden Mittel, insbesondere einer Speicherpumpe eines elektrohydraulischen Bremssystems, einer Rückförderpumpe, einer Ladepumpe, einer Vorladepumpe etc. entsprechen.

Diese Aufgabe wird gelöst durch ein Verfahren zur Ansteuerung einer Pumpe mit den Merkmalen des Patentanspruchs 1 sowie eine Vorrichtung zur Ansteuerung einer Pumpe mit den Merkmalen des Patentanspruchs 2.

Durch die erfindungsgemäß geschaffene Möglichkeit der Variierung der Zeitdauer der Vollansteuerung bzw. kontinuierlichen Ansteuerung zu Beginn bzw. beim Anlauf der Pumpenansteuerung, sowie der Variierung des anfänglichen Pulspausenverhältnisses beim Übergang zu einem getakteten Betrieb der Pumpe kann die Zeitdauer, in der eine einzuregelnde Drehzahl erreichbar ist, gegenüber herkömmlichen Pumpen bzw. Pumpenansteuerungen stark verkürzt werden. Das erfindungsgemäße Verfahren sowie die erfindungsgemäße Vorrichtung zeichnen sich ferner dadurch aus, daß diese beschleunigte Einstellung bzw. Einregelung der Pumpendrehzahl in sehr einfacher Weise, nämlich durch Überwachung einer an der Pumpe anliegenden Spannung und/oder der Bordspannung des Kraftfahrzeugs durchführbar ist.

Anschließend an das anfängliche Puls-Pulspausenverhältnis wird das weitere Puls-Pulspausenverhältnis während der getakteten Ansteuerung in Abhängigkeit von der Nachlaufspannung des Pumpenmotors variiert. Eine derartige Verwendung der Nachlaufspannung der Pumpe erweist sich als sehr zuverlässig, da die Nachlaufspannung der Pumpe in erster Näherung proportional zur Drehzahl der Pumpe bzw. des Pumpenmotors ist.

Die Erfindung wird nun anhand der beigefügten Zeichnung weiter erläutert. In dieser zeigt
- Figur 1: (stark vereinfacht) die wesentlichen Elemente zur Ansteuerung einer Rückförderpumpe,
- Figur 2: schematisch ein Zeitdiagramm einer typischen Ansteuerung des Pumpenmotors einer Rückförderpumpe, und
- Figur 3: Diagramme zur Darstellung der erfindungsgemäßen Variierung der Pumpenansteuerung.

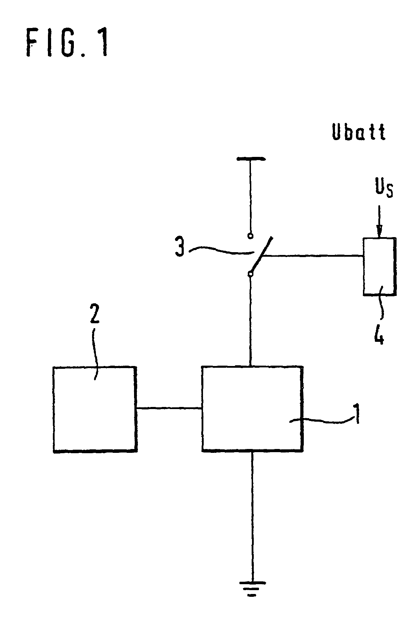

In Figur 1 sind die wesentlichen Elemente zur erfindungsgemäßen Ansteuerung eines Pumpenmotors 1 zur Beaufschlagung einer Rückförderpumpe 2 dargestellt. Das durch die Rückförderpumpe 2 beaufschlagbare Bremssystem ist aus Gründen der Einfachheit der Darstellung nicht gezeigt.

Der Pumpenmotor 1 liegt über ein betätigbares Schaltmittel 3 an der Bordspannung des Kraftfahrzeugs Ubatt an. Das Schaltmittel 3 ist mittels einer Steuervorrichtung 4 betätigbar. Das Schaltmittel 3 ist beispielsweise als Feldeffekttransistor realisiert. Bei Schließen des Schaltmittels wird der Pumpenmotor 1 mit Strom beaufschlagt.

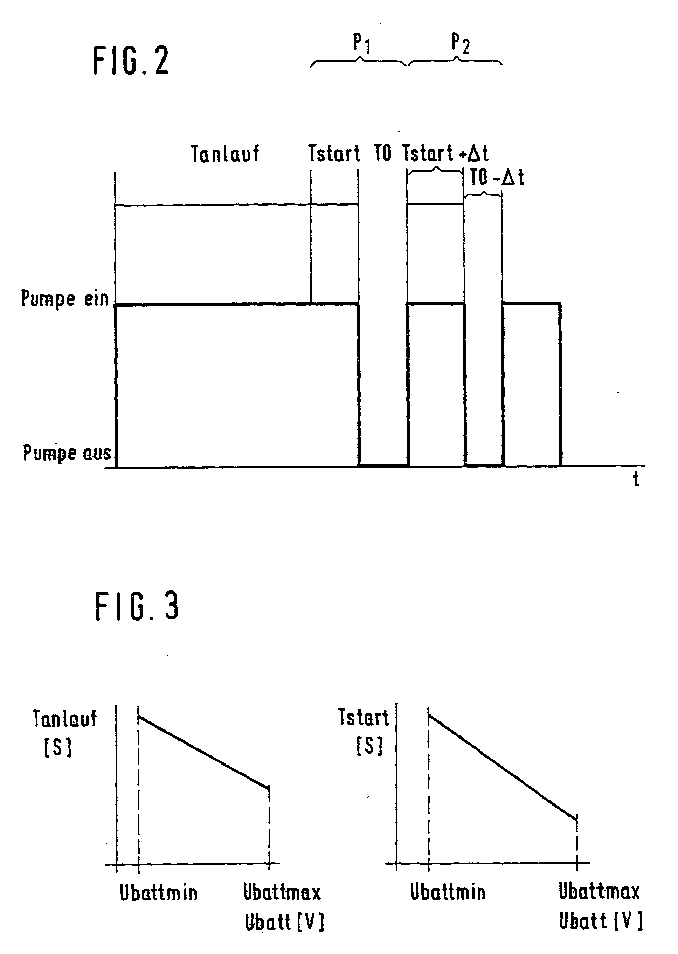

Anhand der Figur 2 ist eine typische Ansteuerung des Pumpenmotors 1 der Rückförderpumpe 2 dargestellt. Während einer ersten Phase Tanlauf sind die Schaltmittel 3 geschlossen, so daß der Pumpenmotor 1 kontinuierlich angesteuert wird. An Tanlauf schließt sich der getaktete Betrieb der Pumpenansteuerung an, wobei Perioden Pᵢ (i = 1, 2, ...) Ansteuerzeiten (Pulszeiten) Tstart und Nichtansteuerzeiten (Pulspausen) T0 umfassen. Als Start-Puls-Pulspausenverhältnis wird das Verhältnis von Tstart : T0 während der ersten Periode P₁ bezeichnet. Man erkennt, daß (beispielsweise) für die zweite Periode P₂ sich ein verändertes Puls-Pulspausen-verhältnis ergibt, in welchem die Zeitdauer Tstart um Δt erhöht, und die Zeitdauer T0 um Δt vermindert ist. Entsprechend diesem veränderten Puls-Pulspausenverhältnis wird der Pumpenmotor 1 während der Periode P₂ bezüglich der Periode P₁ verhältnismäßig länger angesteuert.

In Figur 3 ist dargestellt, wie die Zeitdauer Tanlauf, sowie die Zeitdauer Tstart der ersten Periode P₁ des getakteten Betriebes der Pumpe in Abhängigkeit von einer veränderlichen Bordspannung variiert werden kann. Es sei zur Erläuterung angenommen, daß die Bordspannung Ubatt zwischen einem minimalen Wert Ubattmin und einem maximalen Wert Ubattmax schwanken kann. Es ist zu erkennen, daß für geringere Bordspannungen sowohl die Zeitdauer Tanlauf der anfänglichen kontinuierlichen Ansteuerung der Pumpe, als auch die Zeitdauer Tstart der ersten Periode P₁ des getakteten Betriebes entsprechend bei niedrigerer Bordspannung (Ubattmin) erhöht werden.

Die Anpassung der Zeitdauern Tanlauf und Tstart wird durch die Steuervorrichtung 4 durchgeführt, welche als Eingangssignal unter anderem ein die an dem Pumpenmotor 1 anliegende Spannung und/oder die Bordspannung Ubatt repräsentierendes Signal Uₛ empfängt. Zweckmäßigerweise werden diese Spannungen zu Beginn der Ansteuerung des Pumpenmotors ermittelt. Es ist jedoch auch möglich, sie vor, insbesondere unmittelbar vor, oder während der Ansteuerung zu ermitteln.

Die sich in den weiteren Perioden P₂...Pₙ ergebenden Änderungen des Pulspausenverhältnisses, in Figur 2 für die Periode P₂ als Tstart + Δt bzw. T0 - Δt dargestellt, können beispielsweise in Abhängigkeit von der Nachlaufspannung des Pumpenmotors der Rückförderpumpe bestimmt werden. Eine Nachlaufspannung am Pumpenmotor 1 entsteht dadurch, daß bei einem Abschalten des Pumpenmotors zunächst in Folge der Induktivität des Motors die an dem Motor anliegende Spannung ansteigt und anschließend exponentiell abfällt. Wie bereits erwähnt, ist die Drehzahl des Pumpenmotors in erster Näherung proportional zu dieser Nachlaufspannung.

Wird beispielsweise von einer kurzzeitigen Vollansteuerung (ca. 50 bis 200 msek) auf den getakteten Betrieb übergegangen, so wird das anfängliche Puls-Pulspausenverhältnis, welches durch die Ansteuerzeit Tstart sowie die Nichtansteuerzeit T0 gekennzeichnet ist, in Abhängigkeit von der Bordspannung eingestellt. Dieses anfängliche Puls-Pulspausenverhältnis kann bereits während der Vollansteuerung ermittelt werden, so daß insgesamt eine schnellere Einregelung einer gewünschten Drehzahl des Pumpenmotors 1 bzw. der Rückförderpumpe 2 erzielbar ist. Die gewünschte Förderleistung der Pumpe wird somit nach dem Einschalten schneller erreicht.

Es können somit sich auf die Pumpenansteuerung auswirkende Schwankungen der Bordspannung in einfacher Weise ausgeglichen werden.

Es sei angemerkt, daß die Bordspannung an beliebigen geeigneten Stellen des Bordnetzes abgegriffen werden kann. Es erweist sich insbesondere als vorteilhaft, die an dem Pumpenmotor abfallende Spannung zu diesem Zwecke zu verwenden.

## Patentansprüche

1. Verfahren zur Ansteuerung eines elektrischen Pumpenmotors einer Druckmittelpumpe einer Kraftfahrzeugbremsanlage, insbesondere einer elektrohydraulischen Kraftfahrzeugbremsanlage, wobei der Pumpenmotor bei einer Pumpenanforderung
- in einer ersten Phase für eine Zeitdauer ungetaktet und
- im Anschluss daran in einer zweiten Phase mit einem weiteren Puls-Pulspausenverhältnis getaktet angesteuert wird,
wobei die Zeitdauer der ungetakteten Ansteuerung in Abhängigkeit
- von einer vor und/oder zu Beginn und/oder während der ungetakteten Ansteuerung ermittelten Bordspannung und/oder
- von einer vor und/oder zu Beginn und/oder während der ungetakteten Ansteuerung am Pumpenmotor anliegenden Spannung
variiert wird, und
wobei zusätzlich auch ein anfängliches Puls-Pulspausenverhältnis zu Beginn der getakteten Ansteuerphase in Abhängigkeit von
- der vor und/oder zu Beginn und/oder während der ungetakteten Ansteuerung ermittelten Bordspannung und/oder
- der vor und/oder zu Beginn und/oder während der ungetakteten Ansteuerung am Pumpenmotor anliegenden Spannung
variiert wird, und
wobei anschließend an das anfängliche Puls-Pulspausenverhältnis das weitere Puls-Pulspausenverhältnis während der getakteten Ansteuerung in Abhängigkeit von einer Nachlaufspannung des Pumpenmotors (1) variiert wird.

2. Vorrichtung zur Ansteuerung eines elektrischen Pumpenmotors einer Druckmittelpumpe einer Kraftfahrzeugbremsanlage, insbesondere einer elektrohydraulischen Kraftfahrzeugbremsanlage, wobei erste Mittel enthalten sind, durch welche der Pumpenmotor bei einer Pumpenanforderung
- in einer ernsten Phase für eine Zeitdauer ungetaktet und
- im Anschluss daran in einer zweiten Phase mit einem weiteren Puls-Pulspausenverhältnis getaktet angesteuert wird,
wobei die Zeitdauer der ungetakteten Ansteuerung in Abhängigkeit
- von einer vor und/oder zu Beginn und/oder während der ungetakteten Ansteuerung ermittelten Bordspannung und/oder
- von einer vor und/oder zu Beginn und/oder während der ungetakteten Ansteuerung am Pumpenmotor anliegenden Spannung
- variiert wird, und
wobei zweite Mittel enthalten sind, durch welche zusätzlich auch ein anfängliches Puls-Pulspausenverhältnis zu Beginn der getakteten Ansteuerphase in Abhängigkeit von
- der vor und/oder zu Beginn und/oder während der ungetakteten Ansteuerung ermittelten Bordspannung und/oder
- der vor und/oder zu Beginn und/oder während der ungetakteten Ansteuerung am Pumpenmotor anliegenden Spannung
variiert wird, und
wobei weitere Mittel enthalten sind, durch welche anschließend an das anfängliche Puls-Pulspausenverhältnis das weitere Puls-Pulspausenverhältnis während der getakteten Ansteuerung in Abhängigkeit von einer Nachlaufspannung des Pumpenmotors (1) variiert wird.

## Claims

1. Method for actuating an electric pump motor of a pressure medium pump of a motor vehicle brake system, in particular an electrohydraulic motor vehicle brake system, wherein the pump motor is actuated, when there is a pump request,
- in an unclocked fashion for a period of time in a first phase and
- then in a clocked fashion with a further pulse duty factor in a second phase,
the period of time of the unclocked actuation being varied as a function
- of an on-board power system voltage which is determined before and/or at the start of and/or during the unclocked actuation and/or
- of a voltage which is applied to the pump motor before and/or at the start of and/or during the unclocked actuation, and
an initial pulse duty factor at the start of the clocked actuation phase being also additionally varied as a function of
- the on-board power system voltage which is determined before and/or at the start of and/or during the unclocked actuation and/or
- the voltage which is applied to the pump motor before and/or at the start of and/or during the unclocked actuation, and
wherein, subsequent to the initial pulse duty factor, the further pulse duty factor during the clocked actuation is varied as a function of a run-on voltage of the pump motor (1).

2. Device for actuating an electric pump motor of a pressure medium pump of a motor vehicle brake system, in particular of an electrohydraulic motor vehicle brake system, containing first means by which, when there is a pump request, the pump motor is clocked
- in an unclocked fashion for a period of time in a first phase and
- then in a clocked fashion with a further pulse duty factor in a second phase,
wherein the period of time of the unclocked actuation is varied as a function
- of an on-board power system voltage which is determined before and/or at the start of and/or during the unclocked actuation and/or
- of a voltage which is applied to the pump motor before and/or at the start of and/or during the unclocked actuation, and
containing second means by which an initial pulse duty factor is also varied at the start of the clocked actuation phase as a function of
- the on-board power system voltage which is determined before and/or at the start of and/or during the unclocked actuation and/or
- the voltage which is applied to the pump motor before and/or at the start of and/or during the unclocked actuation, and
containing further means by which, subsequent to the initial pulse duty factor, the further pulse duty factor is varied during the clocked actuation as a function of a run-on voltage of the pump motor (1).

## Revendications

1. Procédé pour la commande d'un moteur de pompe électrique d'une pompe de pression d'un système de freinage de véhicule automobile, notamment d'un système de freinage électrohydraulique de véhicule automobile, le moteur de pompe étant commandé pour une exigence de pompage :
- de manière asynchrone dans une première phase pour une première durée et
- de manière synchrone dans une deuxième phase suivant cette première phase avec un autre rapport impulsions/pauses d'impulsion,
- la durée de l'excitation asynchrone variant en fonction
- d'une tension de bord calculée avant et/ou au début et/ou pendant l'excitation asynchrone, et/ou
- d'une tension appliquée sur le moteur de pompe avant et/ou au début et/ou pendant l'excitation asynchrone, et
- un rapport initial impulsions/pauses d'impulsion variant également au début de la phase d'excitation synchrone en fonction
- de la tension de bord calculée avant et/ou au début et/ou pendant l'excitation asynchrone, et/ou
- de la tension appliquée sur le moteur de pompe avant et/ou au début et/ou pendant l'excitation asynchrone, et
l'autre rapport impulsions/pauses d'impulsion variant à la suite du rapport initial impulsions/pauses d'impulsion pendant l'excitation synchrone en fonction d'une tension de marche à vide du moteur de pompe (1).

2. Dispositif pour la commande d'un moteur de pompe électrique d'une pompe de pression d'un système de freinage de véhicule automobile, notamment d'un système de freinage électrohydraulique de véhicule automobile, des premiers moyens étant compris pour permettre de commander le moteur de pompe lors d'une exigence de pompage :
- de manière asynchrone dans une première phase pour une première durée et
- de manière synchrone dans une deuxième phase suivant cette première phase avec un autre rapport impulsions/pauses d'impulsion
- la durée de l'excitation asynchrone variant en fonction
- d'une tension de bord calculée avant et/ou au début et/ou pendant l'excitation asynchrone, et/ou
- d'une tension appliquée sur le moteur de pompe avant et/ou au début et/ou pendant l'excitation asynchrone, et
- des deuxièmes moyens étant compris pour permettre également de varier en plus au début de la phase d'excitation synchrone un rapport initial impulsions/pauses d'impulsion en fonction
- de la tension de bord calculée avant et/ou au début et/ou pendant l'excitation asynchrone, et/ou
- de la tension appliquée sur le moteur de pompe avant et/ou au début et/ou pendant l'excitation asynchrone, et
d'autres moyens étant compris pour permettre de varier l'autre rapport impulsions/pauses d'impulsion à la suite du rapport initial impulsions/pauses d'impulsion pendant l'excitation synchrone en fonction d'une tension de marche à vide du moteur de pompe (1).
